# EUROPÄISCHE PATENTSCHRIFT

(11) **EP 3 349 047 B1**
(45) Veröffentlichungstag und Bekanntmachung des Hinweises auf die Patenterteilung: **23.12.2020**
(21) Anmeldenummer: 17151496.1
(22) Anmeldetag: 13.01.2017
(51) Int. Cl.: G01T 1/175, G01F 23/288, G01N 23/083

(54) **MODULSYSTEM FÜR EIN RADIOMETRISCHES MESSGERÄT**
MODULE SYSTEM FOR A RADIOMETRIC MEASURING DEVICE
SYSTÈME MODULAIRE POUR UN APPAREIL DE MESURE RADIOMÉTRIQUE

(43) Veröffentlichungstag der Anmeldung: 18.07.2018
(73) Patentinhaber: Berthold Technologies GmbH & Co. KG, 75323 Bad Wildbad (DE)
(72) Erfinder: Daibenzeiher, Tobias, 75305 Neuenbürg (DE); Freiburger, Ewald, 75245 Neulingen (DE)
(74) Vertreter: Patentanwälte Ruff, Wilhelm, Beier, Dauster & Partner mbB

(56) Entgegenhaltungen:
- WO-A1-2005/075944
- WO-A1-2016/185028
- DE-U1- 29 915 862
- Alfredo Bertero: "Elektor @BULLET Post", Elektorpost, 17. Mai 2013 (2013-05-17), Seiten 1-3, XP055389640, Gefunden im Internet: URL:https://www.elektormagazine.de/files/a ttachment/219 [gefunden am 2017-07-11]

## Beschreibung

Die Erfindung betrifft ein Modulsystem für ein radiometrisches Messgerät.

Die Veröffentlichung Alfredo Bertero: "Elektor @BULLET Post", Elektorpost, 17. Mai 2013 (2013-05-17), Seiten 1-3, zeigt einen sogenannten Arduino-Strahlungsmesser mit einem USB-Anschluss, wobei der Arduino-Strahlungsmesser über seinen USB-Anschluss oder über einen externen Spannungsversorgungsanschluss mit Betriebsenergie versorgt werden kann.

Die WO 2016/185028 A1 zeigt ein radiometrisches Messgerät mit einer Steuergeräte-Schnittstelle, wobei das radiometrische Messgerät ausschließlich über seine Steuergeräte-Schnittstelle mit elektrischer Energie versorgt werden kann.

Die WO 2005/075944 A1 zeigt eine Spannungsversorgung für Sensoren eines modularen Systems.

Die DE 299 15 862 U1 zeigt ein speicherprogrammierbares Steuersystem umfassend ein Basisgerät und an das Basisgerät anschließbare Erweiterungsgeräte, wobei eine Stromversorgungseinheit ausschließlich für die Versorgung des Basisgeräts ausgelegt ist und wobei mindestens ein zusätzliches Stromversorgungsmodul zur Stromversorgung der Erweiterungsgeräte vorhanden ist.

Der Erfindung liegt die Aufgabe zugrunde, ein Modulsystem für ein radiometrisches Messgerät zur Verfügung zu stellen, das möglichst flexibel einsetzbar ist.

Die Erfindung löst diese Aufgabe durch ein Modulsystem für ein radiometrisches Messgerät nach Anspruch 1.

Das radiometrische Messgerät kann beispielsweise ein radiometrischer Szintillationsdetektor zum Nachweis von Gamma- oder Neutronenstrahlung für die Füllstand- oder Dichtemessung in der Prozessindustrie sein.

Das Modulsystem weist ein Basismodul auf.

Das Basismodul weist eine Sensoranordnung auf, die dazu ausgebildet ist, in Abhängigkeit von Strahlung, beispielsweise Gamma- oder Neutronenstrahlung, die auf die Sensoranordnung trifft, ein Messsignal, beispielsweise ein analoges oder digitales Messsignal, zu erzeugen. Das Messsignal kann beispielsweise eine analoge Pulsfolge sein.

Das Basismodul weist weiter eine Signalauswerteeinheit auf, beispielsweise in Form eines Mikroprozessors, die mit der Sensoranordnung elektrisch gekoppelt ist und die dazu ausgebildet ist, in Abhängigkeit von dem Messsignal eine Messgröße zu ermitteln. Beispielsweise kann die Signalauswerteeinheit eine Anzahl von Pulsen des Messsignals pro Zeiteinheit bestimmen und basierend darauf die Messgröße berechnen.

Das Basismodul weist weiter eine Steuergeräte-Schnittstelle auf, wobei das Basismodul mittels der Steuergeräte-Schnittstelle mit mindestens einem Steuergerät zum Datenaustausch, beispielsweise zum Übertragen der Messgröße, koppelbar ist. In einem Basisbetriebszustand wird das Basismodul ausschließlich über seine Steuergeräte-Schnittstelle mit elektrischer Energie versorgt. Der Basisbetriebszustand ist typisch derjenige Betriebszustand des radiometrischen Messgeräts, bei dem das radiometrische Messgerät lediglich das Basismodul und kein Erweiterungsmodul aufweist.

Das Basismodul weist weiter eine Erweiterungsmodul-Schnittstelle auf, die typisch von der Steuergeräte-Schnittstelle getrennt ist.

Das Modulsystem weist weiter mindestens ein Erweiterungsmodul auf, das von dem Basismodul getrennt ausgebildet ist. Das Basismodul kann beispielsweise auf einer ersten Leiterplatte realisiert sein und das Erweiterungsmodul kann auf einer zweiten, von der ersten Leiterplatte verschiedenen Leiterplatte realisiert sein.

Das Erweiterungsmodul weist eine Basismodul-Schnittstelle auf, wobei die Basismodul-Schnittstelle mit der Erweiterungsmodul-Schnittstelle zum Datenaustausch und/oder Messsignal-Austausch koppelbar ist. Die Basismodul-Schnittstelle ist mit der Erweiterungsmodul-Schnittstelle weiter auch zum Energieaustausch koppelbar.

Das Erweiterungsmodul weist weiter eine Anzahl, beispielsweise zwischen 1 und 10, von Funktionsgruppen auf. Die Funktionsgruppen können beispielsweise in Hardware und/oder Software verkörpert sein.

Das Erweiterungsmodul weist weiter eine Energieversorgungs-Schnittstelle auf, die mit einer von dem Basismodul und dem Erweiterungsmodul getrennten Energieversorgungseinheit koppelbar ist. Die mittels der Energieversorgungs-Schnittstelle zur Verfügung gestellte Energie dient zur Energieversorgung des Erweiterungsmoduls. Die mittels der Energieversorgungs-Schnittstelle zur Verfügung gestellte Energie kann weiter auch zur (zusätzlichen) Energieversorgung des Basismoduls dienen.

Das radiometrische Messgerät setzt sich aus dem Basismodul und, falls funktional erforderlich, aus einem oder mehreren Erweiterungsmodulen zusammen.

Die Funktionsgruppen können eine Ein- und/oder Ausgabe-Funktionsgruppe, beispielsweise in Form von I/O-Ports, und/oder eine Strom-Ausgabe-Funktionsgruppe, und/oder eine Strom-Eingabe-Funktionsgruppe, und/oder eine Feldbus-Funktionsgruppe, und/oder eine Tachosignal-Funktionsgruppe aufweisen.

Die Sensoranordnung kann ein oder mehrere Halbleitersensorelemente aufweisen, das bzw. die dazu ausgebildet ist/sind, in Abhängigkeit von der Strahlung das Messsignal, gegebenenfalls unter Zuhilfenahme einer geeigneten analogen und/oder digitalen Signalkonditionierung, zu erzeugen. Das Halbleitersensorelement kann eine Halbleiter-Photodiode mit interner Verstärkung sein, beispielsweise eine Avalanche-Photodiode (APD) oder ein Silicon Photomultiplier (SiPM).

Die Sensoranordnung kann einen Szintillator und einen optisch mit dem Szintillator gekoppelten Detektor aufweist, wobei der Detektor dazu ausgebildet ist, das Messsignal, gegebenenfalls unter Zuhilfenahme einer geeigneten analogen und/oder digitalen Signalkonditionierung, zu erzeugen. Der Szintillator kann, beispielsweise von einem optischen Detektor mittels einer Glasscheibe oder Epoxidharzverguss getrennt, außerhalb eines Messgerätegehäuses angeordnet sein. Selbstverständlich kann der Szintillator auch innerhalb des Messgerätegehäuses angeordnet sein.

Das Modulsystem weist ein Gehäuse auf, wobei typisch zumindest das Basismodul in dem Gehäuse angeordnet ist. Für den Fall, das ein erweiterter Funktionsumfang des Messgeräts notwendig ist, wird zusätzlich das Erweiterungsmodul in demselben Gehäuse angeordnet.

Das Basismodul kann einen Basismodul-Funktionsumfang aufweisen, wobei das oder die Erweiterungsmodule bzw. deren Funktionsgruppen den Basismodul-Funktionsumfang ergänzt/ergänzen und/oder erweitert/erweitern. Beispielsweise kann der Basismodul-Funktionsumfang ausschließlich die Erfassung der Messgröße beinhalten, wobei die Funktionsgruppen weitere Funktionen zur Verfügung stellen, beispielsweise eine digitale Signalverarbeitung des Messsignals.

Die Erweiterungsmodul-Schnittstelle, die Steuergeräte-Schnittstelle und/oder die Basismodul-Schnittstelle kann/können eine Sicherheits-Begrenzungsschaltung aufweisen. Die Sicherheits-Begrenzungsschaltung kann eine Ex i Begrenzungsschaltung zum Begrenzen von Strom, Spannung und Leistung sein. Die Ex i Begrenzungsschaltung weist die Eigenschaft auf, elektrische Energie, die im Messgerät enthalten oder gespeichert ist, im Fehlerfall abzublocken oder in Wärme umzuwandeln, so dass diese nicht an die Anschlussklemmen des Messgeräts weitergeleitet wird und ein zündfähiges Gemisch zur Explosion bringen kann. Zur Ausgestaltung der Begrenzungsschaltungen wird auf die einschlägige Fachliteratur verwiesen.

Die über die Energieversorgungs-Schnittstelle des Erweiterungsmoduls zur Verfügung gestellte Energie kann (auch) zur Energieversorgung der Erweiterungsmodul-Schnittstelle des Basismoduls dienen. Beispielsweise kann ein Schnittstellentreiber der Erweiterungsmodul-Schnittstelle des Basismoduls durch das Erweiterungsmodul mit Energie gespeist werden, so dass eine Kommunikation zwischen dem Basismodul und dem Erweiterungsmodul ermöglicht wird. Mittels des erfindungsgemäßen Modulsystems für ein radiometrisches Messgerät, beispielsweise in Form eines Szintillationsdetektors, ist eine modulare Erweiterbarkeit des radiometrischen Messgeräts bei Bedarf möglich.

Das Basismodul weist typisch folgende Elemente auf.

Zunächst ist ein Halbleitersensorelement zum direkten Nachweis von Gamma- oder Neutronenstrahlung oder alternativ ein Szintillator mit nachgeschaltetem Halbleiter- oder Vakuum-Elektronenvervielfacher-Sensorelement zum indirekten Nachweis der Sekundärstrahlung (Szintillationslicht) vorgesehen.

Weiter sind im Basismodul typisch Mittel zur analogen Signalverarbeitung vorgesehen.

Eine Digitaleinheit des Basismoduls dient dann beispielsweise zum Bestimmen eines Füllstands, einer Dichte und/oder eines Massenstroms aus dem vorverarbeiteten analogen Signal.

Eine Prozessschnittstelle des Basismoduls dient zur Prozessgrößenkommunikation.

Das Basismodul kann nun nach Kundenanforderung erweitert und angepasst werden, indem je nach Kundenanforderung ein oder mehrere Erweiterungsmodule an das Basismodul angekoppelt werden.

Das Basismodul kann durch seine Prozessanbindung gespeist werden. Hierbei kann das Basismodul beispielsweise als so genanntes Loop-Powered-Feldgerät und/oder als Explosion-Geschütztes Feldgerät ausgeführt sein.

Das Basismodul deckt mit seinen Funktionen einen überwiegenden Anteil der typischen Anforderungen ab. Wenn darüber hinausgehend weitere Funktionen benötigt werden, wie beispielsweise Relais, aktive Stromausgänge, Eingänge, Spektroskopie etc., wird das Basismodul durch ein oder mehrere Erweiterungsmodul erweitert. Auf diese Weise kann die Funktionalität heutiger 4-Leiter-Geräte erzielt werden. Zusätzlich können Funktionen wie eine komplexe digitale Signalverarbeitung bei Bedarf realisiert werden.

Da die Energieversorgung des Basismoduls über seine Prozessanbindung sehr limitiert ist, wird in dem/den Erweiterungsmodulen eine eigenständige Energieversorgung zur Verfügung gestellt, d.h. das 2-Leitergerät wird zu einem 4-Leitergerät aufgerüstet.

Die Sensorik des Basismoduls kann mittels der Funktionsgruppen des Erweiterungsmoduls zur Bestimmung von zusätzlichen prozessgrößenrelevanten Parametern erweitert werden. Funktionsgruppen können beispielsweise eine Prozesstemperatur mittels eines geeigneten Temperatursensors oder 4-20 mA Eingangs erfassen und/oder eine Gasdichtekompensationsinformation über 4-20 mA oder eine Feldbusschnittstelle erfassen. Desweitern kann eine Master-Slave-Anbindung zur Erweiterung des Messbereiches zur Verfügung gestellt werden.

Falls die Basismodul-Schnittstelle mit der Erweiterungsmodul-Schnittstelle zum Übertragen des Messsignals gekoppelt ist, kann das Messsignal auf dem Erweiterungsmodul digital verarbeitet werden, beispielsweise indem das Messsignal A/D-gewandelt und anschließend digital signalverarbeitet wird. So können beispielsweise Spektralinformationen des Detektors ermittelt werden. Die hierzu benötigten Analogsignale zur ADC-Abtastung können über einen im Basismodul angeordneten Treiber erzeugt werden, der durch das Erweiterungsmodul mit Energie versorgt wird. Dies ermöglicht, dass das hochfrequente Messsignal auf dem Erweiterungsmodul genutzt werden kann. Abgeleitet aus dem digitalisierten Mess- bzw. Analogsignal können Fremdstrahlungserkennung und Mehrisotopenanwendungen realisiert werden, wie sie in Analysensystemen zum Einsatz kommen.

Da im Erweiterungsmodul wesentlich mehr elektrische Leistung zur Verfügung steht als im Basismodul, können auf dem Erweiterungsmodul eine Vielzahl unterschiedlicher Schnittstellen zur Verfügung gestellt werden, beispielsweise Strom IN/OUT (auch im Source Mode), Puls IN/OUT, beispielsweise für Tachoeingänge für Bandgeschwindigkeiten, Ethernet-Schnittstellen für Feldbusprotokolle, etc.

Die eigenständige Energieversorgung des Erweiterungsmodules ermöglicht es, das Messgerät mit einer Eingangsspannung von 20-260VAC/DC zu betreiben. Die Energieversorgung des Erweiterungsmoduls kann eigensicher ausgeführt sein, beispielsweise über eine handelsübliche Ex-Begrenzungsschaltung. Hierdurch wird dann mehr Energie als mittels der 4-20mA Schnittstelle dem System zur Verfügung gestellt.

Auch ist es möglich, das Erweiterungsmodul mit einer Speiseschnittstelle mit überlagertem FSK Signal zu versorgen.

Die Erfindung wird nachfolgend unter Bezugnahme auf die Zeichnung detailliert beschrieben. Hierbei zeigt:

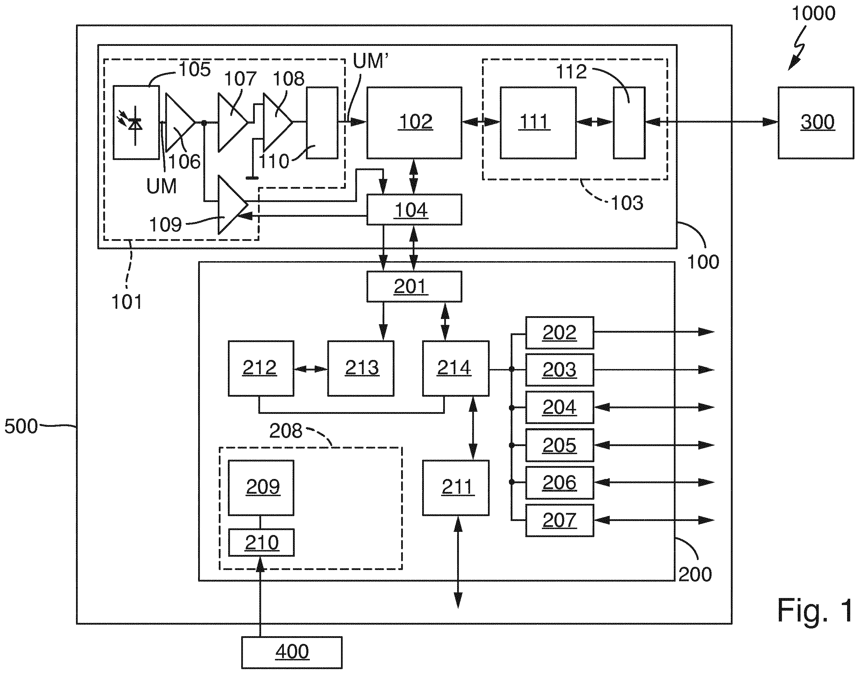

- Fig. 1: ein Blockschaltbild eines Modulsystems für ein radiometrisches Messgerät aufweisend ein Basismodul und ein Erweiterungsmodul.

Fig. 1 zeigt ein Blockschaltbild eines Modulsystems für ein radiometrisches Messgerät 1000. Das radiometrische Messgerät 1000 ist in Fig. 1 in einer beispielhaften Ausbaustufe dargestellt.

Das Modulsystem bzw. das radiometrisches Messgerät 1000 weist ein Basismodul 100 auf. Das Basismodul 100 weist eine Sensoranordnung 101 auf, die dazu ausgebildet ist, in Abhängigkeit von Strahlung, die auf die Sensoranordnung 101 trifft, ein aufbereitetes analoges bzw. quasi-digitales Messsignal UM' zu erzeugen.

Die Sensoranordnung 101 weist ein Halbleitersensorelement 105 auf, das dazu ausgebildet ist, in Abhängigkeit von der Strahlung ein Messsignal UM zu erzeugen. Dem Halbleitersensorelement 105 nachgeschaltet sind Komponenten 106 bis 109 zur analogen Signalaufbereitung, beispielsweise zum Verstärken, Filtern usw. des Messsignals UM. Eine Komparator 110 der Sensoranordnung 101 erzeugt schließlich das vom Messsignal UM abhängige, aufbereitete Messsignal UM' als eine Pulsfolge, deren Zählrate mit einer Intensität der zu messenden Strahlung korreliert. Insoweit sei auch auf die einschlägige Fachliteratur verwiesen.

Das Basismodul 100 weist weiter eine Signalauswerteeinheit 102 in Form eines Mikroprozessors auf, der mit der Sensoranordnung 101 elektrisch gekoppelt ist und der in Abhängigkeit von dem aufbereiteten Messsignal UM' eine Messgröße, beispielsweise in Form eines Füllstands, ermittelt. Insoweit sei auch auf die einschlägige Fachliteratur verwiesen.

Das Basismodul 100 weist weiter eine Steuergeräte-Schnittstelle 103 mit einem 4-20 mA Highway Addressable Remote Transducer (HART) 111 und einer EX i Begrenzungsschaltung 112 auf. Das Basismodul 100 ist mittels der Steuergeräte-Schnittstelle 103 mit mindestens einem Steuergerät 300 zum Datenaustausch koppelbar, wobei das Basismodul 100 in einem Basisbetriebszustand ausschließlich über seine Steuergeräte-Schnittstelle 103 mit elektrischer Energie versorgt wird. Das Basismodul 100 nimmt seinen Basisbetriebszustand dann ein, wenn kein Erweiterungsmodul 200 mit ihm gekoppelt ist.

Das Basismodul 100 weist weiter eine Erweiterungsmodul-Schnittstelle 104 mit einer Ex i Begrenzungsschaltung auf.

Das Modulsystem bzw. das radiometrische Messgerät 1000 weist weiter das optionale Erweiterungsmodul 200 auf.

Das Erweiterungsmodul 200 weist eine Basismodul-Schnittstelle 201 mit einer Ex i Begrenzungsschaltung auf, wobei die Basismodul-Schnittstelle 201 mit der Erweiterungsmodul-Schnittstelle 104 zum Datenaustausch und/oder Energieaustausch und/oder Messsignal-Austausch gekoppelt ist.

Das Erweiterungsmodul 200 weist weiter Funktionsgruppen in Form einer Ein/Ausgabe-Funktionsgruppe 207, einer Strom-Ausgabe-Funktionsgruppe 202, einer Strom-Eingabe-Funktionsgruppe 203, einer Feldbus-Funktionsgruppe (RS485 und/oder Ethernet) 205, 206, und einer Tachosignal-Funktionsgruppe 204 auf.

Das Erweiterungsmodul 200 weist weiter eine Energieversorgungs-Schnittstelle 208 auf, die mit einer von dem Basismodul 100 und dem Erweiterungsmodul 200 getrennten Energieversorgungseinheit 400 koppelbar ist, wobei über die Energieversorgungs-Schnittstelle 208 zur Verfügung gestellte Energie zur Energieversorgung des Erweiterungsmoduls 200 und des Basismoduls 100 dienen kann, solange das Erweiterungsmodul 200 und die Energieversorgungseinheit 400 vorhanden sind. Die Energieversorgungs-Schnittstelle 208 weist exemplarisch ein Netzteil 209 mit weitem Eingangsspanungsbereich und eine optionale EX i Begrenzungsschaltung 210 auf.

Das Erweiterungsmodul 200 weist weiter einen A/D-Wandler 213 auf, um das Messsignal UM, welches über die Schnittstellen 104 und 201 übertragen wird, zu digitalisieren.

Das Erweiterungsmodul 200 weist weiter ein optionales FPGA 212 auf, welches das digitalisierte Messsignal einer digitalen Signalverarbeitung unterzieht, um eine über die rudimentäre Messwerterzeugung im Basismodul 100 hinausgehende Auswertung des Messsignals UM zu implementieren.

Das Erweiterungsmodul 200 weist weiter eine leistungsfähige CPU 214 auf, die dazu ausgebildet ist, komplexe Auswertefunktionen etc. zur Verfügung zu stellen. Die CPU 214 ist mit einer seriellen Schnittstelle 211, beispielsweise einer USB-Schnittstelle, gekoppelt, so dass Ergebnisse der Auswertung im Wartungs- oder Servicefall über die USB-Schnittstelle 211 nach außen übertragen werden können.

Alle oder ein Teil der oben beschriebenen Komponenten sind in einem Gehäuse 500 angeordnet.

Alternativ zu der gezeigten Darstellung kann die Sensoranordnung einen nicht näher dargestellten Szintillator und einen optisch mit dem Szintillator gekoppelten Detektor aufweisen, wobei der Detektor dazu ausgebildet ist, das Messsignal UM zu erzeugen.

## Patentansprüche

1. Modulsystem für ein radiometrisches Messgerät (1000), aufweisend:
- ein Basismodul (100), mit
- einer Sensoranordnung (101), die dazu ausgebildet ist, in Abhängigkeit von Strahlung, die auf die Sensoranordnung (101) trifft, ein Messsignal zu erzeugen,
- einer Signalauswerteeinheit (102), die mit der Sensoranordnung (101) elektrisch gekoppelt ist und die dazu ausgebildet ist, in Abhängigkeit von dem Messsignal eine Messgröße zu ermitteln,
- einer Steuergeräte-Schnittstelle (103), wobei das Basismodul (100) mittels der Steuergeräte-Schnittstelle (103) mit mindestens einem Steuergerät (300) zum Datenaustausch koppelbar ist, wobei das Basismodul (100) dazu ausgebildet ist, in einem Basisbetriebszustand ausschließlich über seine Steuergeräte-Schnittstelle (103) mit elektrischer Energie versorgt zu werden, und
- eine Erweiterungsmodul-Schnittstelle (104),
- ein Erweiterungsmodul (200), das von dem Basismodul (100) getrennt ausgebildet ist, mit
- einer Basismodul-Schnittstelle (201), wobei die Basismodul-Schnittstelle (201) mit der Erweiterungsmodul-Schnittstelle (104) zum Datenaustausch und/oder Messsignal-Austausch koppelbar ist, und wobei die Basismodul-Schnittstelle (201) mit der Erweiterungsmodul-Schnittstelle (104) zum Energieaustausch koppelbar ist,
- einer Anzahl von Funktionsgruppen (202-207), und
- einer Energieversorgungs-Schnittstelle (208), die mit einer von dem Basismodul (100) und dem Erweiterungsmodul (200) getrennten Energieversorgungseinheit (400) koppelbar ist, wobei über die Energieversorgungs-Schnittstelle (208) zur Verfügung gestellte Energie zur Energieversorgung des Erweiterungsmoduls (200) dient, und
- ein Gehäuse (500), wobei das Basismodul (100) und das Erweiterungsmodul (200) in dem Gehäuse (500) anordenbar sind.

2. Modulsystem nach Anspruch 1, **dadurch gekennzeichnet, dass**
- die Anzahl von Funktionsgruppen eine Ein/Ausgabe-Funktionsgruppe (207), und/oder eine Strom-Ausgabe-Funktionsgruppe (202), und/oder eine Strom-Eingabe-Funktionsgruppe (203), und/oder eine Feldbus-Funktionsgruppe (205, 206), und/oder eine Tachosignal-Funktionsgruppe (204) aufweist.

3. Modulsystem nach einem der vorhergehenden Ansprüche, **dadurch gekennzeichnet, dass**
- die Sensoranordnung (101) ein Halbleitersensorelement (105) aufweist, das dazu ausgebildet ist, in Abhängigkeit von der Strahlung das Messsignal zu erzeugen.

4. Modulsystem nach einem der vorhergehenden Ansprüche, **dadurch gekennzeichnet, dass**
- die Sensoranordnung einen Szintillator und einen optisch mit dem Szintillator gekoppelten Detektor aufweist, wobei der Detektor dazu ausgebildet ist, das Messsignal zu erzeugen.

5. Modulsystem nach einem der vorhergehenden Ansprüche, **dadurch gekennzeichnet, dass**
- das Basismodul (100) einen Basismodul-Funktionsumfang aufweist, wobei die Anzahl von Funktionsgruppen (202-207) den Basismodul-Funktionsumfang ergänzt und/oder erweitert.

6. Modulsystem nach einem der vorhergehenden Ansprüche, **dadurch gekennzeichnet, dass**
- die Erweiterungsmodul-Schnittstelle (104), die Steuergeräte-Schnittstelle (103) und/oder die Basismodul-Schnittstelle (201) eine Sicherheits-Begrenzungsschaltung aufweist/aufweisen.

7. Modulsystem nach einem der vorhergehenden Ansprüche, **dadurch gekennzeichnet, dass**
- die über die Energieversorgungs-Schnittstelle (208) zur Verfügung gestellte Energie zur Energieversorgung der Erweiterungsmodul-Schnittstelle (104) dient.

## Claims

1. Module system for a radiometric measuring device (1000), comprising:
- a basic module (100) comprising
- a sensor arrangement (101) which is designed to generate a measurement signal on the basis of radiation which strikes the sensor arrangement (101),
- a signal evaluation unit (102) which is electrically coupled to the sensor arrangement (101) and is designed to determine a measurement variable on the basis of the measurement signal,
- a control device interface (103), the basic module (100) being able to be coupled to at least one control device (300) by the control device interface (103) for the purpose of interchanging data, the basic module (100) being designed, in a basic operating condition, to be supplied with electrical energy solely via its control device interface (103), and
- an expansion module interface (104),
- an expansion module (200) which is separate from the basic module (100) and comprises
- a basic module interface (201), the basic module interface (201) being able to be coupled to the expansion module interface (104) for the purpose of interchanging data and/or interchanging measurement signals, and the basic module interface (201) being able to be coupled to the expansion module interface (104) for the purpose of interchanging energy,
- a number of functional groups (202-207), and
- an energy supply interface (208) which is able to be coupled to an energy supply unit (400) separate from the basic module (100) and the expansion module (200), wherein energy provided via the energy supply interface (208) is used to supply energy to the expansion module (200), and
- a housing (500), the basic module (100) and the expansion module (200) being able to be arranged within the housing (500).

2. Module system according to claim 1, **characterized in that**
- the number of functional groups includes: an input/output functional group (207), and/or a current output functional group (202), and/or a current input functional group (203), and/or a field bus functional group (205, 206), and/or a tacho signal functional group (204).

3. Module system according to any of the preceding claims, **characterized in that**
- the sensor arrangement (101) comprises a semiconductor sensor element (105) which is designed to generate a measurement signal on the basis of radiation.

4. Module system according to any of the preceding claims, **characterized in that**
- the sensor arrangement comprises a scintillator and a detector optically coupled to the scintillator, wherein the detector is designed to generate the measurement signal.

5. Module system according to any of the preceding claims, **characterized in that**
- the basic module (100) comprises a basic module range of functions, the number of functional groups (202-207) supplementing and/or expanding the basic module range of functions.

6. Module system according to any of the preceding claims, **characterized in that**
- the expansion module interface (104), the control device interface (103) and/or the basic module interface (201) include a safety limitation circuit.

7. Module system according to any of the preceding claims, **characterized in that**
- the energy provided via the energy supply interface (208) is used to supply energy to the expansion module interface (104).

## Revendications

1. Système modulaire pour un appareil de mesure radiométrique (1000), présentant :
- un module de base (100), comprenant
- un ensemble de capteurs (101) qui est réalisé pour produire un signal de mesure en fonction d'un rayonnement incident sur l'ensemble de capteurs (101),
- une unité d'évaluation de signal (102) qui est couplée électriquement à l'ensemble de capteurs (101) et qui est réalisée pour déterminer une grandeur de mesure en fonction du signal de mesure,
- une interface d'appareil de commande (103), le module de base (100) pouvant être couplé au moyen de l'interface d'appareil de commande (103) à au moins un appareil de commande (300) en vue d'un échange de données, le module de base (100) étant réalisé pour être alimenté en énergie électrique exclusivement par son interface d'appareil de commande (103) dans un état de fonctionnement de base, et
- une interface de module d'extension (104),
- un module d'extension (200) qui est réalisé séparément du module de base (100), comprenant
- une interface de module de base (201), l'interface de module de base (201) pouvant être couplée à l'interface de module d'extension (104) en vue d'un échange de données et/ou d'un échange de signaux de mesure, et l'interface de module de base (201) pouvant être couplée à l'interface de module d'extension (104) en vue d'un échange d'énergie,
- un nombre de groupes de fonctions (202 à 207), et
- une interface d'alimentation en énergie (208) qui peut être couplée à une unité d'alimentation en énergie (400) séparée du module de base (100) et du module d'extension (200), l'énergie fournie par l'intermédiaire de l'interface d'alimentation en énergie (208) servant à l'alimentation en énergie du module d'extension (200), et
- un boîtier (500), le module de base (100) et le module d'extension (200) pouvant être disposés dans le boîtier (500).

2. Système modulaire selon la revendication 1, **caractérisé en ce que**
- le nombre de groupes de fonctions présente un groupe de fonctions d'entrée/sortie (207), et/ou un groupe de fonctions de sortie de courant (202), et/ou un groupe de fonctions d'entrée de courant (203), et/ou un groupe de fonctions de bus de terrain (205, 206) et/ou un groupe de fonctions de signal tachymétrique (204).

3. Système modulaire selon l'une quelconque des revendications précédentes, **caractérisé en ce que**
- l'ensemble de capteurs (101) présente un élément de capteur à semi-conducteur (105) qui est réalisé pour produire le signal de mesure en fonction du rayonnement.

4. Système modulaire selon l'une quelconque des revendications précédentes, **caractérisé en ce que**
- l'ensemble de capteurs présente un scintillateur et un détecteur couplé optiquement au scintillateur, le détecteur étant réalisé pour produire le signal de mesure.

5. Système modulaire selon l'une quelconque des revendications précédentes, **caractérisé en ce que**
- le module de base (100) présente une gamme de fonctions de module de base, le nombre de groupes de fonctions (202 à 207) complétant et/ou étendant la gamme de fonctions de module de base.

6. Système modulaire selon l'une quelconque des revendications précédentes, **caractérisé en ce que**
- l'interface de module d'extension (104), l'interface d'appareil de commande (103) et/ou l'interface de module de base (201) présentent un circuit limiteur de sécurité.

7. Système modulaire selon l'une quelconque des revendications précédentes, **caractérisé en ce que**
- l'énergie fournie par l'intermédiaire de l'interface d'alimentation en énergie (208) sert à l'alimentation en énergie de l'interface de module d'extension (104).
